Europäisches Patentamt

European Patent Office

Office européen des brevets

(11) Veröffentlichungsnummer: **0 417 704 A1**

# (12) EUROPÄISCHE PATENTANMELDUNG

(21) Anmeldenummer: 90117410.2

(51) Int. Cl.5: **B60C 23/04**

(22) Anmeldetag: 10.09.90

(30) Priorität: 12.09.89 DE 3930480

(43) Veröffentlichungstag der Anmeldung:
20.03.91 Patentblatt 91/12

(84) Benannte Vertragsstaaten:
AT BE CH DE DK ES FR GB GR IT LI LU NL SE

(71) Anmelder: **Achterholt, Rainer**
**Sportplatzweg 7**
**W-8968 Durach/Weidach(DE)**

(72) Erfinder: **Achterholt, Rainer**
**Sportplatzweg 7**
**W-8968 Durach/Weidach(DE)**

(74) Vertreter: **Brehm, Hans-Peter, Dr. Dipl.-Chem.**
**et al**
**Patentanwälte Kern, Brehm & Partner**
**Albert-Rosshaupter-Strasse 73**
**W-8000 München 70(DE)**

(54) **Eine, ein Druckabnahmesignal erzeugende Ventilkappe für einen Luftreifen.**

(57) Eine auf ein Ventilrohr (6) eines Reifenventils eines Luftreifens aufschraubbare Ventilkappe erzeugt bei einer Druckabnahme im Reifen ein drahtlos übermittelbares Druckabnahmesignal. Innerhalb des Ventilkappengehäuses (1) ist eine mit dem zu überwachenden Reifendruck beaufschlagbare Druckkammer (48) sowie eine Referenzkammer (44) ausgebildet, die beim Aufschrauben der Ventilkappe auf das Reifenventil mit einem vorgegebenen Solldruck beaufschlagbar ist. Innerhalb des Ventilkappengehäuses (1) sind an einer Platine (23) elektrische und/oder elektronische Komponenten (24, 24', 24", 24''', 25) eines Senders angebracht. Es ist eine Stromversorgungsquelle und ein Schaltglied vorhanden, zu dem wenigstens ein innerhalb der Druckkammer (48) befindlicher Leiterabschnitt (28) gehört, der in geringem Abstand zur Ruhelage einer auslenkbaren Membran (40) angeordnet ist. Eine durch Reifendruckabnahme hervorgerufene Membranauslenkung schließt einen Stromkreis und die Senderschaltung wird mit Strom/Spannung versorgt und der Sender liefert ein zeitlich begrenztes Druckabnahmesignal.

EP 0 417 704 A1

Die Erfindung betrifft eine, ein Druckabnahmesignal erzeugende Ventilkappe für einen, mit einem Ventil ausgerüsteten Luftreifen. Die Ventilkappe ist vorzugsweise für die Anwendung bei Pkw-Reifen bestimmt, die bei einem Reifen-Solldruck von etwa 1,4 bis 3,0 bar betrieben werden. Abgewandelte Ausführungsformen sind für Fahrradreifen, Motorradreifen und Lkw-Reifen vorgesehen.

Zu den wesentlichen Bestandteilen der neuen Ventilkappe gehört ein auf ein Ventilrohr des Reifenventils auf schraubbares Gehäuse. Es ist ein Betätigungsglied vorgesehen, das beim Aufschrauben der Ventilkappe auf das Ventilrohr das Reifenventil öffnet. Innerhalb des Ventilkappengehäuses ist eine mit dem zu überwachenden Reifendruck beaufschlagbare Druckkammer sowie eine Referenzkammer ausgebildet, die beim Aufschrauben der Ventilkappe auf das Reifenventil mit einem vorgegebenen Solldruck beaufschlagbar ist. Beide Kammern sind durch eine Membran voneinander getrennt, die eine in die Druckkammer hinein ausgelenkte Stellung einnimmt,wenn der zu überwachende Druck unter den Solldruck sinkt.

Eine Ventilkappe dieser Bauart und Funktionsweise ist aus der Deutschen Patentschrift 35 46 338 bekannt. Bei der bekannten Ventilkappe ist ein, die Druckkammer begrenzender Gehäuseabschnitt durchsichtig ausgebildet. Eine Annäherung der vorzugsweise farbigen Membran an diesen durchsichtigen Gehäuseabschnitt ist optisch wahrnehmbar und dient als Anzeige einer Druckabnahme. Zur Überprüfung des Reifendruckes muß der Fahrzeugführer jede einzelne Ventilkappe überprüfen, was lediglich am stehenden Fahrzeug erfolgen kann.

Die bekannte Funktionsweise, die beim Aufschrauben einer Ventilkappe auf das Reifenventil selbsttätig einen Referenzdruck schafft und dauerhaft speichert, hat sich als besonders einfach, robust und zuverlässig erwiesen. Eine einzige Ausführungsform der Ventilkappe ist bei den verschiedensten Reifendrücken anwendbar, weil lediglich eine Druckdifferenz ermittelt wird. Die Membran kann deshalb dünn und hochempfindlich ausgeführt werden. Die bei bestimmungsgemäßem Gebrauch eines Pkw auftretenden Schwankungen des Reifendruckes können 0,3 bar und mehr betragen. Solche Druckschwankungen verändern den als Bezugsgrundlage dienenden Solldruck innerhalb der Referenzkammer nicht und können die Anzeige und Anzeigegenauigkeit einer solchen Ventilkappe nicht beeinträchtigen.

Ferner ist eine Anzahl Reifendruck-Kontrolleinrichtungen bekannt geworden, die mit drahtloser Signalübertragung arbeiten, wobei innerhalb des Reifens oder an der Felge ein Radiofrequenz- oder Hochfrequenzsender angebracht ist (vgl. etwa DE-PSn 24 41 430, 26 17 448, 29 15 227 oder DE-OS 31 08 998). Zumeist erfordern diese bekannten Einrichtungen Eingriffe an oder Abänderungen der Radfelge. Zum Teil wird die Auslenkung einer elektrisch leitenden oder mit einem elektrisch leitenden Belag versehene Membran zum Schließen oder Öffnen eines elektrischen Kontaktes ausgenutzt, welcher den Sender aktiviert. Mit der DE-OS 36 05 661 ist eine Alarmvorrichtung zum Anschließen an einen Luftreifen vorgeschlagen worden, die mit einem Sender, einer Versorgungsquelle und einem Druckerfassungsmittel ausgerüstet ist, wobei die Alarmvorrichtung am Ventilschaft des Reifens anschraubbar ist. Als Druckerfassungsmittel dient eine mit Hilfe einer Feder vorgespannte Membran, die bei unzulässig hohem oder tiefem Reifendruck einen Schalter betätigt, woraufhin der Sender aktiviert wird. Solange der unzulässige Reifendruck herrscht, bleibt der Sender aktiviert und zieht Energie aus der Versorgungsquelle. Es bestehen Zweifel, ob dieser Vorschlag realisierbar ist oder bereits realisiert wurde.

Trotz einer Vielzahl bekannter Vorschläge für ReifendruckKontrolleinrichtungen mit drahtloser Signalübermittlung sind entsprechende Einrichtungen bislang nur in untergeordnetem Umfang praktisch realisiert und in den Markt eingeführt worden. Häufig läßt die Zuverlässigkeit der bekannten Einrichtungen unter den rauhen, wechselnden Gebrauchsbedingungen eines Kfz-Rades zu wünschen übrig und/oder die bekannten Einrichtungen sind zu aufwendig und zu teuer.

Davon ausgehend besteht die Aufgabe der vorliegenden Erfindung darin, eine einfach aufgebaute und kostengünstig zu fertigende Ventilkappe der eingangs genannten Art zu schaffen, welche - unter Beibehaltung der oben genannten Vorteile - zuverlässig und störungsfrei eine drahtlose Signalübertragung ermöglicht.

Nach einem weiteren Ziel der Erfindung soll die mit einem Sender und mit einer Stromquelle ausgerüstete Ventilkappe geringe Abmessungen aufweisen, weiterhin allein durch Aufschrauben auf das Reifenventil festlegbar sein und geringes Gewicht besitzen, um eine nennenswerte Unwucht eines mit dieser Ventilkappe ausgerüsteten Luftreifens zu vermeiden.

Nach einem weiteren Ziel soll die Ventilkappe einfach aufgebaut sein und aus möglichst wenigen, vorgefertigten und unabhängig voneinander handhabbaren Komponenten bestehen, aus denen im Wege der automatisierten Massenfertigung die fertige Ventilkappe herstellbar ist.

Nach noch einem weiteren Ziel der Erfindung soll die neue Ventilkappe ohne Austausch der Stromquelle und/oder sonstige Abänderung für den wiederholten Einsatz geeignet sein und eine mehrjährige Gebrauchsdauer gewährleisten.

Ausgehend von einer, ein Druckabnahmesignal erzeugenden Ventilkappe mit den eingangs genannten Merkmalen ist die erf indungsgemäße Lösung dieser Aufgabe und Ziele dadurch gekennzeichnet, daß innerhalb des Ventilkappengehäuses eine Platine vorhanden ist, an der elektrische und/oder elektronische Komponenten eines Senders angebracht sind, der bei Stromversorgung eine oder mehrere Signalfrequenzen erzeugt, die drahtlos bis zu einem benachbart zum Luftreifen angeordneten Empfänger übertragbar sind. Zur Stromversorgung dient eine an oder in dem Gehäuse untergebrachte Batterie und ein mechanisches, im Regelfalle offenes Schaltglied, zu dem ein innerhalb der Druckkammer befindlicher Leiterabschnitt, der in geringem Abstand zur Ruhelage der Membran angeordnet ist. Eine Abnahme des zu überwachenden Reifendruckes gegenüber dem in der Referenzkammer gespeicherten Solldruck verursacht eine Membranauslenkung, welche das Schaltglied schließt, woraufhin ein Stromkreis geschlossen wird, welcher die Schaltung des Senders aktiviert. Der Sender weist eine Ablauf steuerung auf, welche nach kurzfristiger Signalaussendung diese Signalaussendung wieder unterbricht und den Sender erneut in einen Bereitschaftszustand versetzt.

Diese Merkmalskombination ergibt eine einfach aufgebaute und zuverlässig arbeitende Ventilkappe mit geringen Abmessungen, die drahtlos ein Signal an einen Empfänger übermittelt, der vorzugsweise im Bereich der Radaufhängung untergebracht ist. Eine praktische Ausführungsform dieser Ventilkappe hat eine Länge (in Richtung der Ventilachse) von etwa 20 mm und einen Durchmesser von etwa 20 mm und wiegt weniger als 10 g. Diese Ventilkappe kann mit einer Lithiumbatterie ausgerüstet sein, die eine Nennspannung von 3 V liefert und eine Kapazität von mAh besitzt; diese Batterieleistung reicht - wegen der Begrenzung der Dauer der Signalaussendung - für wenigstens 500 bis 1000 Alarmimpulse aus. Die Ventilkappe ist einfach aufgebaut und besteht aus wenigen vorgefertigten, unabhängig handbaren Komponenten, aus denen im Wege der automatisierten Massenfertigung die fertige Ventilkappe herstellbar ist.Vorzugsweise erzeugt der Sender zwei Signalfrequenzen mit unterschiedlicher Frequenz, die alternierend mit vorgebener Impulsfolge abgestrahlt werden. Jedem Sender/jeder Ventilkappe ist ein entsprechend abgestimmter Empfänger zugeordnet, wobei der maximale Abstand zwischen Empfänger und Sender vorzugsweise weniger als 1000 mm beträgt. Unter diesen Bedingungen kann ein Fehlalarm als Folge von Fremdsendungen und/oder die Störung anderer Empfänger praktisch ausgeschlossen werden. Die verschiedenen Reifen eines Kraftfahrzeuges können mit der gleichen Ausführungsform einer Ventilkappe bestückt werden, weil die Zuordnung zum jeweiligen Rad über den jeweiligen Empfänger erfolgt. Vorteilhafte Ausgestaltungen und Weiterbildungen der Erfindung ergeben sich aus den Unteransprüchen.

Der grundlegende, mechanisch-konstruktive Aufbau der erfindungsgemäßen Ventilkappe zur Erzeugung einer Membranauslenkung bei ausreichender Druckabnahme im Luftreifen ist aus der DE-PS 35 46 338 bekannt. Um Wiederholungen zu vermeiden, soll mit dieser Bezugnahme der Inhalt jener Druckschrift - soweit hilfreich und erforderlich - auch zum Bestandteil der vorliegenden Unterlagen gemacht werden. Beim Aufschrauben der Ventilkappe auf das Ventilrohr eines Reifenventils kommt eine 3-Stufen-Abdichtung zustande. In einer ersten Stufe wird eine druckdichte Abdichtung zwischen dem Ventilrohr und dem offenen Gehäuseende der Ventilkappe geschaffen. Hierzu kann innerhalb des offenen Gehäuseendes ein komprimierbares Dichtungselement vorhanden sein, und/oder das Ventilkappengehäuse besteht aus Kunststoff, der sich eng und druckdicht an das Außengewinde des Ventilrohres an legt. In einer zweiten Stufe bei Fortsetzung des Aufschraubvorganges drückt das an der Ventilkappe vorhandene Betätigungsglied gegen den Reifenventilstößel, verstellt diesen gegen seinen Federdruck und öffnet das Reifenventil. Daraufhin strömt Druckmedium aus dem Reifen in den Gehäuseinnenraum der Ventilkappe und beaufschlagt sowohl die Referenzkammer wie die Druckkammer mit dem aktuellen Reifendruck, welcher einem vorgegebenen Reifensolldruck entspricht. Bei Fortsetzung des Aufschraubvorganges wird die Referenzkammer druckdicht verSschlossen. Wie praktische Erfahrungen gezeigt haben, bleibt die Referenzkammer monatelang druckdicht verschlossen und hält den einmal vorgegebenen Solldruck.

Nach einem Gesichtspunkt der vorliegenden Erfindung ist die Referenzkammer innerhalb einer einseitig geschlossenen Dose ausgebildet, deren Dosenöffnung von der Membran verschlossen ist. Diese Dose wird von einem Dosenboden und einer Dosenumfangswand begrenzt, welche eine Stirnfläche aufweist. Eine Druckbeaufschlagung des Doseninnenraumes erfolgt über wenigstens einen innerhalb der Dosenumfangswand ausgesparten Kanal, der an der Stirnfläche der Dosenumfangswand beginnt und in den Doseninnenraum mündet. Diese Dose ist innerhalb des Gehäuses verschieblich gehalten, und beim Auf schrauben der Ventilkappe auf das Reifenventilrohr wird die Dosenstirnfläche gegen eine Dichtung gepreßt, die innerhalb des Ventilkappengehäuses fest angebracht ist. Hierdurch wird der Doseninnenraum und damit die Referenzkammer sicher verschlossen.

Beim Abschrauben der Ventilkappe vom Reifenventil wird der Anpreßdruck zwischen Dosenstirnfläche und Dichtung aufgehoben. Ein innerhalb der Ventilkappe untergebrachtes elastisches Glied sorgt für eine Trennung zwischen Dichtung und Dosenstirnfläche, so daß die Referenzkammer erneut mit einem gegebenenfalls anderen Solldruck beaufschlagt werden kann.

Der erfindungsgemäß vorgesehene Sender besteht im wesentlichen aus einer Digitalschaltung und einem Schwingkreis, dessen Spule als Sendeantenne ausgebildet ist. Nach einem wesentlichen Gesichtspunkt der vorliegenden Erfindung ist eine solche Ablaufsteuerung der Digitalschaltung vorgesehen, welche nach kurzfristiger Signalaussendung diese Signalaussendung wieder unterbricht und den Sender erneut in einen Bereitschaftszustand versetzt.

Hierzu kann die Digitalschaltung als wesentliche Funktionsgruppen vorzugsweise einen RC-Generator, eine Startvorrichtung (Trigger), eine Modulationsschaltung, einen vielstufigen Frequenzteiler und einen ein- und auschaltbaren Leistungsverstärker aufweisen. Der RC-Generator (Oszillator) liefert verschiedene Signalfrequenzen, deren jeweilige Frequenz durch die Komponenten Widerstand (R) und Kondensator (C) bestimmt sind. Die Schaltung ist so aufgebaut, daß durch verschiedene Rückführungen vom Frequenzteiler die entsprechenden Funktionsgruppen der Digitalschaltung so angesteuert werden, daß durch das Schließen des Schaltgliedes die Schaltung gestartet und eine vollständige Signalaussendung durchgeführt wird. Ist dies erfolgt, dann werden die Leistungsverstärker und der RC-Oszillator abgeschaltet, was zu einer ganz wesentlichen Reduzierung der aus der Batterie aufgenommenen Leistung führt. Dadurch ist die Schaltung wieder auf Bereitschaft zurückgeschaltet und ist für eine neue Signalausgabe sendebereit, selbst wenn das Schaltglied weiterhin geschlossen bleibt. Eine erneute Signalausgabe erfolgt erst dann, nachdem die Membran zurückgesetzt und das Schaltglied geöffnet worden ist und bei erneuter Erfassung einer Reifendruckabnahme wieder geschlossen wird.

Das Sendesignal wird vorzugsweise bei vergleichsweise langwelligen Frequenzen im kHz-Bereich abgestrahlt. In diesem Bereich sind kaum Störungen durch fremde Signalquellen zu erwarten. Dennoch kann eine störungsfreie Übertragung des Sendesignals zu dem/den vorzugsweise nicht mehr als 1000 mm entfernten Empfänger(n) im Radbereich des Fahrzeuges erreicht werden.

Um die Kennung zwischen Sender und Empfänger zu erhöhen und durch Fremdsignale ausgelöste Fehlanzeigen weitestgehend auszuschließen, besteht das Sendesignal vorzugsweise aus zwei verschiedenen Frequenzen (beispielsweise 9,6 kHz und 10,4 kHz), welche abwechselnd über eine Zeitspanne von 10 bis 20 Millisekunden erzeugt werden. Die gesamte Dauer eines Sendesignals beträgt vorzugsweise nur einige wenige Sekunden, beispielsweise 1 bis 3 Sekunden und besonders bevorzugt ca. 1,6 Sekunden. Unter diesen Bedingungen reicht die Kapazität der oben angegebenen Lithium-Batterie für wenigstens 500 bis 1000 Alarmimpulse aus, d.h. für die gesamte zu erwartende Lebensdauer des Ventiles.

Der gesamte Sender mit sämtlichen elektrischen und/oder elektronischen Komponenten ist vorzugsweise als Modul ausgeführt. Die Komponenten, einschließlich zwei Chips, einem RC-Generator und einer Anzahl Kondensatoren und Widerstände befinden sich an einer Platine, die eine gedruckte Schaltung bildet. Bei einer praktischen Ausführungsform reicht eine runde Platine mit einem Durchmesser von ca. 17 mm zur Aufnahme sämtlicher Komponenten aus. Diese Platine mit den Komponenten befindet sich geschützt im Inneren einer Kunststoffhülse, an deren Außenumf ang - in einer Nut - die als Drahtwicklung ausgebildete Sendespule angebracht ist. Die gesamte Signalerzeugungseinrichtung einschließlich Referenzkammer mit Schaltglied, Sender und Batterie bildet vorzugsweise ein einziges integriertes Bauteil. Dieses gesamte Bauteil ist innerhalb des Ventilkappengehäuses verschieblich gehalten. An diesem kombinierten Bauteil lassen sich kurze und stabile elektrisch leitende Verbindungen realisieren. Der Zusammenbau der Ventilkappe wird erleichtert, weil sich sämtliche kleinen und/oder empfindlichen Komponenten des Senders sowie die empfindliche Membran an einem einzigen, vorgefertigten Bauteil befinden.

Jeder Ventilkappe mit ihrem Sender ist ein eigener Empf änger zugeordnet. Zu jedem Empfänger gehört typischerweise ein Ferritstab mit einer Empfangsantenne und einer bekannten Empfängerschaltung. Die Stromversorgung der Empfängerschaltung erfolgt über die Stromversorgungsquelle des Fahrzeugs. Die Ausgänge der Empfängerschaltung sind über Verbindungsleitungen mit einer Anzeigeeinrichtung am Armaturenbrett oder dergleichen des Fahrzeugs verbunden. Zur Anzeigeein richtung gehört eine Auswerteelektronik, welche die von einem bestimmten Sender/Empfänger stammenden Impulse der zugehörigen Radanzeige zuordnet. Weiterhin erzeugt die Anzeigeeinrichtung auf die vom Empfänger erhaltenen Impulse hin Sein optisch und/oder akustisch wahrnehmbares Warnsignal, das auch nach Beendigung der Aussendung von Signalfrequenzen so lange bestehen bleibt, bis der Fahrzeuglenker die Warnanzeige gelöscht oder zurückgesetzt hat.

Nach der Aussendung eines Alarmimpulses ist die Ventilkappe erneut zur Aussendung eines neuen Arlarmimpulses bereit, nachdem die Membran in ihre Ruhelage zurückgekehrt ist. Dies kann insbesondere durch Abschrauben der Ventilkappe vom Reifenventil erfolgen, weil dann der Zugang zur Referenzkammer geöffnet und ein Druckausgleich bzw. eine neue Einstellung eines Solldruckes erfolgen kann.

Die in der erfindungsgemäßen Ventilkappe vorhandenen elektrischen und/oder elektronischen Komponenten und Bauteile werden aus einer Stromversorgungsquelle, vorzugsweise einer Knopfzelle mit Strom/Spannung versorgt. Die Digitaschaltung des Senders befindet sich im Regelfalle in einem Bereitschaftszustand. Diese Schaltung ist mit einem mechanischen, im Regelfalle offenen Schaltglied verknüpft, zu dem ein Leiterabschnitt gehört, der sich innerhalb der Druckkammer befindet und dort in geringem Abstand zur Ruhelage der Membran feststehend angeordnet ist. Eine ausreichende Abnahme des Druckes im Reifen und damit auch in der Druckkammer bewirkt eine in die Druckkammer hinein gerichtete Auslenkung der Membran. Diese Membranauslenkung erzeugt eine elektrisch leitende Verbindung zwischen diesem Leiterabschnitt und einem weiteren Kontakt des Schaltgliedes, woraufhin ein Stromkreis geschlossen wird, welcher die Senderschaltung aktiviert.

Es ist möglich, die auslenkbare Membran selbst aus einem elektrisch leitenden Material zu fertigen und als beweglichen Kontakt des Schaltgliedes zu verwenden. Allerdings kann es Schwierigkeiten bereiten, eine ausreichende elektrische Leitfähigkeit mit der gewünschten Elastizität und mechanischen Festigkeit und Beständigkeit des Membranmaterials zu verbinden.

Alternativ ist es möglich, ein nicht-leitendes Membranmaterial aus Kunststoff oder Gummi mit den gewünschten elastischen Eigenschaften mit einer elektrisch leitenden Beschichtung zu versehen. Im Einzelfall kann diese Beschichtung die Empfindlichkeit, die Dauerhaftigkeit und/oder das Ansprechverhalten der Membran beeinträchtigen. Weiterhin ist es möglich, eine hinsichtlich ihrer elastischen und mechanischen Eigenschaften optimale Membran aus Kunststoff oder Gummimaterial auszuwählen, und diese Membran auf ihrer zum Leiterabschnitt benachbarten Oberfläche mit einer dünnen elektrisch leitenden Kunststoff-Folie zu belegen. Bei dieser elektrisch leitenden Kunststoff-Folie kann es sich beispielsweise um eine mit Ruß gefüllte leitfähige Polycarbonatfolie handeln (die von BAYER AG unter der Handelsbezeichnung MAKROFOL vertrieben wird). Eine Schichtdicke dieser Polycarbonatfolie von etwa 35 ist ausreichend und gut geeignet. Diese elektrisch leitende Kunststoff-Folie wird vorzugsweise kreisförmig ausgestanzt und weist eine randständige Anschlußfahne auf, die mit dem Anschlußkontakt des Schaltgliedes elektrisch leitend verbunden wird. Vorzugsweise wird diese elektrisch leitende Kunststoff-Folie mit einer Anzahl radialer, vom Folienmittelpunkt ausgehender und den Folienrand nicht erreichender Einschnitte versehen; beispielsweise sind zwei, sich rechtwinklig kreuzende Einschnitte gut geeignet. Dank dieser Einschnitte behindert die Anwesenheit dieser unmittelbar auf der Membran aufliegenden und an ihrem Rand eingespannten, elektrisch leitenden Kunststoff-Folie die Membranauslenkung nicht.

Nach einer weiteren, im vorliegenden Falle vorzugsweise vorgesehenen Alternative wird im Zentrum der Membran ein elektrisch leitendes Metallplättchen oder ein Metallring angebracht, das/der über einen dünnen Metalldraht elektrisch leitend mit der Senderschaltung verbunden ist. Die Anwesenheit dieses Metallplättchens/Metallringes beeinträchtigt die Membranauslenkung nicht und bildet einen einfachen und robusten beweglichen Kontakt des Schaltgliedes.

In jedem Falle wird ein mechanisch bewegliches Schaltglied geschaffen, das einer Membranauslenkung praktisch keine Gegenkraft entgegensetzt. Die Empfindlichkeit und das Ansprechverhalten der Membran wird durch Integrierung der Membran in eine elektrische Schalteinrichtung nicht beeinträchtigt. Vielmehr wird ein praktisch ohne Gegendruck arbeitender, mechanischer Schalter geschaffen, der auch unter den schwierigen und wechselnden Krafteinwirkungen an einem sich drehenden Rad sicher und zuverlässig arbeitet. Versuche mit. den erfindungsgemäßen Ventilkappen haben gezeigt, daß diese Ausbildung der Membran und des Schaltgliedes eine Abnahme des Reifendruckes von wenigstens 0,2 bar zuverlässig und reproduzierbar erfaßt und daraufhin den Sender aktiviert. Eine Membranauslenkung von wenigen 1/10-Millimeter ist ausreichend, um den Schalter zu schließen und die Senderschaltung mit Strom/Spannung zu versorgen.

In diesem Falle kann der innerhalb der Druckkammer befindliche Leiterabschnitt vorzugsweise aus einem Metallbügel bestehen, der an gegenüberliegenden Stellen an dem über die Membran hinausstehenden Abschnitt der Dosenumfangswand befestigt und im wesentlichen parallel zur Membran ausgerichtet ist. Dieser Metallbügel ist einige 1/10-mm im Abstand zur Membran bzw. zu der von der Membran getragenen elektrisch leitenden Kunststoff-Folie bzw. zu dem von der Membran getragenen Metallplättchen angeordnet. Die Anordnung des Leiterabschnittes parallel und in geringem Abstand zur Membran erfordert wenig Bauhöhe und liefert einen rasch und zuverlässig ansprechenden Schalter.

Nachstehend wird eine bevorzugte Ausführungsform einer erfindungsgemäßen Ventilkappe mit Bezugnahme auf eine Figur erläutert; die letztere zeigt anhand einer schematischen Schnittdarstellung eine erfindungsgemäße Ventilkappe.

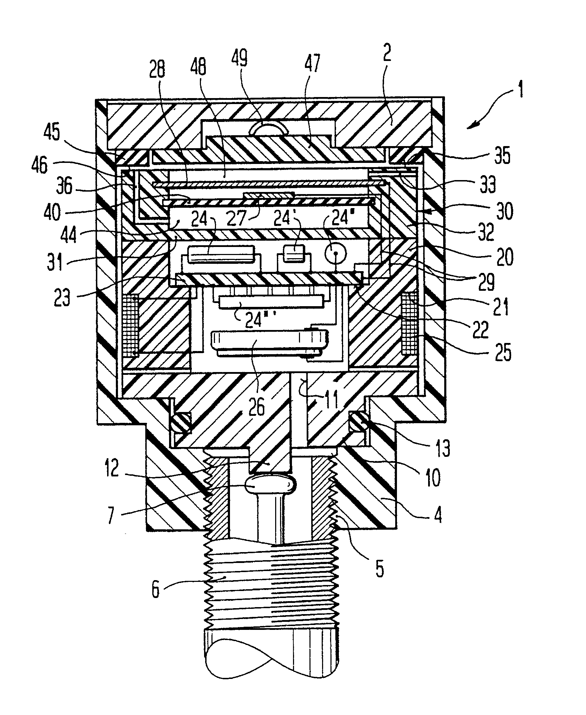

Die in der Figur dargestellte Ventilkappe weist ein einseitig geschlossenes Gehäuse 1 auf, mit einem Deckel 2 und einer zylindrischen Umfangswand 3, die abgestuft in einen einstückig angeformten Hülsenabschnitt 4 übergeht, an dessen Innenumfang ein Innengewinde 5 ausgebildet ist. Dieser Hülsenabschnitt 4 bildet das offene Ende der Ventilkappe, das auf ein Reifenventil aufschraubbar ist, von dem im vorliegenden Falle lediglich ausschnittsweise ein Ventirohr 6 und ein federbelasteter Ventilstößel 7 dargestellt ist. Das Ventilrohr 6 ist mit einem angepaßten Außengewinde versehen. Das gesamte Ventilkappengehäuse 1 besteht vorzugsweise aus schlagzähem Kunststoff.

An der Abstufung zwischen Umfangswand 3 und Hülsenabschnitt 4 ist verschieblich eine Druckplatte 10 geführt, von welcher einstückig ein etwa mit der Ventilkappen-Längsmittelachse fluchtendes Betätigungsglied 12 absteht. Beim Aufschrauben der Ventilkappe auf ein Reifenventil trifft dieses Betätigungsglied 12 auf den Ventilstößel 7 und drückt diesen entgegen seiner Federbelastung nieder, so daß aus dem daraufhin geöffneten Reifenventil der Innenraum der Ventilkappe mit dem aktuellen Reifendruck beaufschlagt wird. In der Druckplatte 10 ist wenigstens ein Kanal 11 ausgespart, über welchen eine Druckmittelverbindung zwischen dem offenen Reifenventil und dem Innenraum der Ventilkappe hergestellt wird. Wie in der Zeichnung angedeutet, kann am Außenumfang der Druckplatte 10 eine umlaufende Nut ausgespart sein, in welche eine Dichtung 13, etwa ein O-Ring eingesetzt ist, welcher die Druckplatte 10 gegenüber der Innenumfangswand des Gehäuses 1 abdichtet. Alternativ könnte eine - nicht dargestellte - Dichtung vorgesehen werden, die mit dem Ventilrohr 6 des Reifenventils zusammenwirkt.

Benachbart zu der Druckplatte 10 ist eine Hülse 20 verschieblich innerhalb des Gehäuses 1 angeordnet. Diese Hülse 20 weist an ihrem Außenumfang eine Nut 21 und an ihrem In nenumfang eine vorspringende Schulter 22 auf. An dieser Schulter 22 ist eine Platine 23 abgestützt, an der sich die elektrischen und/oder elektronischen Komponenten 24, 24′, 24″, 24‴ eines Senders befinden. Zu diesem Sender gehört eine als Drahtwicklung ausgebildete Sendespule 25, die innerhalb der Nut 21 am Außenumfang der Hülse 20 untergebracht ist. Weiterhin ist im Innenraum der Hülse 20 eine Knopfzelle 26 untergebracht.

Benachbart zur Hülse 20 ist eine Dose 30 verschieblich innerhalb des Ventilkappengehäuses 1 angeordnet. Diese Dose 30 besteht aus einem Dosenboden 31 und einer Dosenumfangswand 32, die eine Stirnfläche 35 aufweist. Am Innenumfang der Dosenumfangswand 32 ist eine Membran 40 eingespannt, in deren Zentrum ein Metallplättchen 41 angebracht ist. Es wird eine Referenzkammer 44 geschaffen, die von der Membran 40, dem Dosenboden 31 und der Dosenumfangswand 32 begrenzt ist. In der Dosenumfangswand 32 ist ein Kanal 36 ausgespart, der an der Stirnfläche 35 der Dosenumfangswand 32 beginnt und in die Referenzkammer 44 mündet. Durch diesen Kanal 36 hindurch kann die Referenzkammer 44 mit dem Reifensolldruck beaufschlagt werden. An der Innenseite des Gehäusedeckels 2 ist eine ringförmige Dichtung 45 angebracht, die eine zur Stirnfläche 35 parallele Dichtfläche 46 aufweist. Sofern die Stirnfläche 35 unter Anpreßdruck an dieser Dichtfläche 46 anliegt, ist der Kanal 36 gesperrt und die Referenzkammer 44 druckdicht verschlossen.

Benachbart zur Referenzkammer 44 ist eine Druckkammer 48 ausgebildet, die von der Membran 40, einem über die Membran 40 hinausstehenden Abschnitt der Dosenumf angswand 32 und einer Platte 47 begrenzt ist. Ein elastisches Glied 49, etwa eine Tellerfeder oder ein komprimierbarer Gummiring ist zwischen der Platte 47 und dem Gehäusedeckel 2 eingesetzt. Eine Druckbeaufschlagung der Druckkammer 48 erfolgt über wenigstens eine - nicht dargestellte - Kerbe in der Stirnfläche 35 oder durch eine Querbohrung 33 in dem über die Membran hinausstehenden Abschnitt der Dosenumfangswand 32. Es be steht eine nichtsperrbare Strömungsmittelverbindung zwischen der Druckkammer 48 und dem geöffneten Reifenventil.

Vorzugsweise ist die Dose 30 dauerhaft mit der Hülse 20 verbunden, und beide zusammen bilden eine einheitliche Signalerzeugungseinrichtung mit Druckerfassungs- und Sendeteil.

Innerhalb der Druckkammer 48 befindet sich ein Leiterabschnitt 28, der in geringem Abstand zur Ruhelage der Membran 40 angeordnet ist. Dieser Leiterabschnitt 28 ist über eine erste Leitung mit der Senderschaltung verbunden. Ein an der Membran 40 angebrachtes Metallplättchen 27 ist über eine zweite Leitung mit der Senderschaltung verbunden.

Beim Aufschrauben der Ventilkappe auf ein Reifenventil erfolgt zuerst eine druckdichte Abdichtung zwischen dem Außengewinde am Ventilrohr 6 und dem Innengewinde 5 an dem Hülsenabschnitt 4 des Ventilkappengehäuses 1. Beim weiteren Aufschrauben drückt das Betätigungsglied 12 den Ventilstößel 7 nieder und Druckmittel kann aus dem offenen Reifenventil in den Innenraum der Ventilkappe strömen. Das Druckmittel beaufschlagt sowohl die Referenzkammer 44 wie die Druckkammer 48 mit dem aktuellen, als Solldruck dienenden Reifendruck. Beim weiteren Aufschrauben stößt die Stirnfläche des Ventilrohres 6 an der Unterseite der Druckplatte an und die Stirnfläche 35 der Dose 30 wird gegen die ringförmige Dichtung 45 gepreßt und der Kanal 36 verschlossen. Die Referenzkammer 44 ist mit dem vorgegebenen Solldruck beaufschlagt und verschlossen. Nimmt daraufhin gegebenenfalls der zu überwachende Reifendruck ab, so sinkt auch der Druck in der Druckkammer 48. Die Membran 40 wird in die Druckkammer 48 hinein ausgelenkt und es kommt zu einer elektrisch leitenden Berührung zwischen dem Leiterabschnitt 28 und dem Metallplättchen 27, die zusammen einen mechanisch betätigten, elektrischen Schalter bilden. Es fließt ein Strom, welcher die Schaltung des Senders aktiviert, woauf dieser zeitlich befristet eine oder mehrere Signalfrequenzen aussendet, bis die Digitalschaltung selbsttätig die Signalaussendung wieder unterbricht.

Wird daraufhin die Ventilkappe vom Reifenventil abgeschraubt, so wird durch die Federkraft des elastischen Gliedes 49 die Stirnfläche 35 der Dose 30 von der ringförmigen Dichtung 45 getrennt und es tritt ein Druckausgleich zwischen Druckkammer 48 und Referenzkammer 44 ein. Die Membran nimmt erneut ihre Ruhelage ein, und das Metallplättchen 27 wird von dem Leiterabschnitt 28 getrennt. Die Ventilkappe ist erneut einsatzbereit.

Eine praktische Ausführungsform der in der Figur dargestellten Ventilkappe weist eine Länge (in Richtung der Ventilachse) von etwa 20 mm und einen Durchmesser von etwa 20 mm auf und wiegt (einschließlich Knopfzelle) weniger als 10 g.

## Ansprüche

1. Eine, ein Druckabnahmesignal erzeugende Ventilkappe für einen, mit einem Ventil ausgerusteten Luftreifen, Smit einem auf ein Ventilrohr (6) des Reifenventils aufschraubbarem Gehäuse (1), in welchem eine, mit dem zu überwachenden Reifendruck beauf schlagbare Druckkammer (48) sowie eine Referenzkammer (44) ausgebildet ist, die beim Auf schrauben der Ventilkappe auf das Reifenventil mit einem vorgegebenen Solldruck beaufschlagbar ist, wobei beide Kammern (44, 48) durch eine Membran (40) voneinander getrennt sind, die eine in die Druckkammer (48) hinein ausgelenkte Stellung einnimmt, wenn der zu überwachende Druck unter den Solldruck sinkt, und mit einem Betätigungsglied (12), das beim Aufschrauben der Ventilkappe auf das Ventilrohr (6) das Reifenventil öffnet,
dadurch gekennzeichnet , daß
innerhalb des Gehäuses (1) eine Platine (23) vorhanden ist, an der elektrische und/oder elektronische Komponenten (24, 24′, 24″, 24‴, 25) eines Senders angebracht sind, der bei Stromversorgung eine oder mehrere Signalfrequenzen erzeugt, die drahtlos bis zu einem benachbart zum Luftreifen angeordneten Empfänger übertragbar sind;
an oder in dem Gehäuse (1) eine Batterie (26) und ein mechanisches, im Regelfalle offenes Schaltglied (27, 28) untergebracht sind, Zu dem ein innerhalb der Druckkammer (48) befindlicher Leiterabschnitt (28) gehört, der in geringem Abstand zur Ruhelage der Membran (40) angeordnet ist;
eine Membranauslenkung eine elektrisch leitende Verbindung zwischen diesem Leiterabschnitt (28) und einem weiteren, mit einer Schaltung des Senders verbundenen Kontakt (27) erzeugt; und
der Sender (24, 24′, 24″, 24‴; 25) eine Ablaufsteuerung aufweist, welche nach kurzfristiger Signalaussendung diese Signalaussendung wieder unterbricht und den Sender erneut in einen Bereitschaftszustand versetzt.

2. Ventilkappe nach Anspruch 1,
dadurch gekennzeichnet , daß
die Referenzkammer (44) innerhalb einer Dose (30) ausgebildet ist, deren Dosenöffnung von der Membran (40) verschlossen ist; und
eine Druckbeaufschlagung des Doseninnenraumes über wenigstens einen, innerhalb einer Dosenumfangswand (32) ausgesparten Kanal (36) erfolgt, der an einer Stirnfläche (35) der Dosenumfangswand (32) beginnt und in den Doseninnenraum mündet.

3. Ventilkappe nach Anspruch 2,
dadurch gekennzeichnet , daß
die Dose (30) innerhalb des Gehäuses (1) verschieblich gehalten ist; und
die Dosenstirnfläche (35) beim Auf schrauben der Ventilkappe auf das Ventilrohr (6) gegen eine Dichtung (45) gepreßt wird, die innerhalb des Gehäuses (1) fest angebracht ist.

4. Ventilkappe nach einem der Ansprüche 1 bis 3,
dadurch gekennzeichnet , daß
der Leiterabschnitt (28) an einem über die Membran (40) hinausstehenden Abschnitt der Dosenumfangswand (32) befestigt ist.

5. Ventilkappe nach Anspruch 4,
dadurch gekennzeichnet , daß
der Leiterabschnitt (28) parallel zur Membran (40) ausgerichtet ist.

6. Ventilkappe nach einem der Ansprüche 1 bis 5,
dadurch gekennzeichnet , daß
der weitere Kontakt (27) ein Metallplättchen ist, das im Zentrum der Membran (40) angebracht ist.

7. Ventilkappe nach einem der Ansprüche 2 bis 6,
dadurch gekennzeichnet , daß
benachbart zu ihrer Stirnfläche (35) in der Dosenumfangswand (32) eine oder mehrere Kerben ausgespart ist/sind, über welche die Druckkammer (48) ständig in einer Druckmittelverbindung mit dem geöffneten Reifenventil steht.

8. Ventilkappe nach Anspruch 3,
dadurch gekennzeichnet , daß
ein elastisches Glied (49) vorhanden ist, das die Dose (30) von der Dichtung (46) weg zu verschieben sucht.

9. Ventilkappe nach einem der Ansprüche 1 bis 8,
dadurch gekennzeichnet , daß

die Platine (23) am Innenumfang einer Hülse (20) abgestützt ist, die verschieblich innerhalb des Gehäuses (1) gehalten ist.

10. Ventilkappe nach Anspruch 9,
dadurch gekennzeichnet , daß
die Batterie (26) innerhalb der Hülse (20) angebracht ist.

11. Ventilkappe nach Anspruch 9,
dadurch gekennzeichnet , daß
der Sender mit einer Sendespule (25) versehen ist, die als Drahtwicklung ausgebildet ist, die innerhalb einer Nut (21) am Außenumfang der Hülse (20) untergebracht ist.

12. Ventilkappe nach einem der Ansprüche 9 bis 11,
dadurch gekennzeichnet , daß
die Dose (30) mit der Hülse (20) dauerhaft verbunden ist.

13. Ventilkappe nach einem der Ansprüche 1 bis 12,
dadurch gekennzeichnet , daß
das Betätigungsglied (7) an einer Druckplatte (10) angebracht ist, die verschieblich im Gehäuse (1) gehalten ist.

14. Ventilkappe nach einem der Ansprüche 1 bis 13,
dadurch gekennzeichnet , daß
der Sender eine Digitalschaltung und einen Schwingkreis aufweist, dessen Spule (25) als Sendeantenne ausgebildet ist.

15. Ventilkappe nach Anspruch 14,
dadurch gekennzeichnet , daß
die Digitalschaltung einen RC-Generator, eine Startvorrichtung (Trigger), eine Modulatorschaltung, einen vielstufigen Frequenzteiler und einen ein- und ausschaltbaren Leistungsverstärker aufweist.

16. Ventilkappe nach einem der Ansprüche 1 bis 15,
dadurch gekennzeichnet , daß
der Sender zwei verschiedene, vergleichsweise langwellige Signalfrequenzen in kHz-Bereich erzeugt, die abwechselnd abgestrahlt werden.

17. Ventilkappe nach einem der Ansprüche 15 oder 16,
dadurch gekennzeichnet , daß
eine Ablaufsteuerung der Digitalschaltung vorgesehen ist, wobei mit Hilfe des RC-Generators und des Frequenzteilers zwei verschiedene Frequenzen erzeugt werden, die abwechselnd ausgesendet werden, nach einer vorgegebenen Zyklenzahl die Signalaussendung beendet wird, und die gesamte Schaltung erneut in einen Bereitschaftszustand versetzt wird.

18. Ventilkappe nach einem der Ansprüche 1 bis 17,
dadurch gekennzeichnet , daß
die Signalaussendung nach einigen wenigen Sekunden vorzugsweise nach 1 bis 3 Sekunden

selbsttätig unterbrochen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-C-3 546 338  (ACHTERHOLT)<br>* Zusammenfassung; Figuren 1, 3 *<br>— — — | 1,7,9,12, 13 | B 60 C 23/04 |
| A | WO-A-8 803 879  (ROBERT BOSCH GMBH)<br>* Seite 5, Absätze 1 - 2; Figur 2 *<br>— — — | 1-3,11, 12,14,15 | |
| A | DE-C-3 738 413  (ROBERT BOSCH GMBH)<br>* Spalte 6, Zeilen 4 - 29; Figur 3 *<br>— — — | 1,4-6 | |
| A | WO-A-8 905 239  (ROBERT BOSCH GMBH)<br>* Zusammenfassung; Figuren 2, 3 *<br>— — — | 2,11,12, 14,15 | |
| A | GB-A-8 922 01  (RICCHINI)<br>* Seite 1, Zeile 60 - Seite 2, Zeile 79; Figur *<br>— — — | 1,7 | |
| A | INGENIEURS DE L'AUTOMOBILE. no. 8, November 1984, BOULOGNE FR Seiten 86 - 91; G Beghin et al: "Mesure de pression et surveillance de pneumatiques"<br>* Seite 88, linke Spalte, Absätze 1 - 3; Figur 5 *<br>— — — | 10 | |
| A | GB-A-2 171 525  (PRECISION MECANIQUE LABINAL)<br>* Seite 4, Zeilen 15 - 38; Figuren 3, I, VI, VII *<br>— — — — — | 16-18 | RECHERCHIERTE SACHGEBIETE (Int. Cl.5)<br><br>B 60 C |

Der vorliegende Recherchenbericht wurde für alle Patentansprüche erstellt

| Recherchenort | Abschlußdatum der Recherche | Prüfer |
|---|---|---|
| Den Haag | 07 Dezember 90 | MYON G.J-P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument